# EUROPÄISCHE PATENTSCHRIFT

(11) **EP 0 393 304 B1**
(45) Veröffentlichungstag und Bekanntmachung des Hinweises auf die Patenterteilung: **12.05.1993**
(21) Anmeldenummer: 90100400.2
(22) Anmeldetag: 10.01.1990
(51) Int. Cl.: B29C 63/34, F16L 55/16

(54) **Verfahren zum Auskleiden eines im Erdreich verlegten Leitungsrohres**
Method for lining an underground pipe
Procédé de revêtement d'une conduite enterrée

(30) Priorität: 27.02.1989 DE 3906057; 10.11.1989 DE 3937478
(43) Veröffentlichungstag der Anmeldung: 24.10.1990
(73) Patentinhaber: Müller, Hans, D-32816 Schieder-Schwalenberg (DE)
(72) Erfinder: Müller, Hans, D-4938 Schieder-Schwalenberg 2 (DE); Suerbaum, Hermann, D-4938 Schieder-Schwalenberg (DE)
(74) Vertreter: Stracke, Alexander, Dipl.-Ing.

(56) Entgegenhaltungen:
- EP-A- 0 101 340
- EP-A- 0 205 621
- EP-A- 0 209 396
- EP-A- 0 228 998
- EP-A- 0 351 570
- BE-A- 904 833
- DE-A- 3 721 314
- GB-A- 2 018 384
- US-A- 4 466 401
- PATENT ABSTRACTS OF JAPAN, Band 8, Nr. 54 (M-282)[1491], 10. März 1984; & JP-A-58 208 014 (NIHON KANKEN KOGYO K.K.) 03-12-1983

## Beschreibung

Die Erfindung bezieht sich auf ein Verfahren zum Auskleiden eines im Erdreich verlegten Leitungsrohres, vorzugsweise eines aus Beton, Asbestzement oder Steinzeug gefertigten Abwasserkanals, unter Verwendung eines wenigstens eine Schicht aus einem Faservlies aufweisenden Auskleideschlauchs, dessen Faservliesschicht mit einem aushärtbaren Kunstharz getränkt, der Auskleideschlauch in das Leitungssrohr eingeführt, mit einem Druckmedium an die Innenfläche des zu sanierenden Leitungsrohres angepreßt und das Kunstharz ausgehärtet wird.

Es ist ein Verfahren dieser Art bekannt (DE-PS 22 40 153), bei dem die Auskleidung an der Außenseite mit einer flüssigkeitsundurchlässigen Schicht versehen ist. Durch diese undurchlässige Schicht soll eine vorherige Reinigung der Rohrleitung entfallen. Es hat sich jedoch herausgestellt, daß eine gründliche Reinigung notwendig ist, da in einer alten Rohrleitung immer Ablagerungen vorhanden sind, die einen großen Teil des Strömungsquerschnittes ausfüllen können.

Da durch die flüssigkeitsundurchlässige Außenschicht eine Verbindung der Auskleidung mit der Innenwand der Rohrleitung nicht erfolgen kann, werden undichte Stellen, wie z.B. Risse oder schadhafte Rohrverbindungen, nicht abgedichtet, so daß aus dem Erdreich eindringendes Wasser sich in den zwischen der Auskleidung und der Innenwandung des Kanals liegenden Ringraum sammelt. Über Seiteneinläufe und Hausanschlüssedie bei jeder Art von Auskleidung nach erfolgter Installation aufgefräst werden müssen - kann Grundwasser trotz neuer Auskleidung in das Leitungsrohr infiltrieren oder umgekehrt Abwasser in das umgebende Erdreich exfiltrieren. Eine Festlegung der Auskleidung in der Rohrleitung gegen eine Verschiebung in Längsrichtung ist nicht zu erreichen. Einbindungen von Hausanschlüssen können nach dem bekannten Verfahren nicht wasserdicht ausgeführt werden. Es kommt zu Hinterfliessungen zwischen der eingebrachten Auskleidung und dem liegenden Rohr. Längenausdehnungen des ausgehärteten Schlauches können zumindest teilweise Seiteneinläufe und Hausanschlüssen versperren.

Der Auskleideschlauch weist auch auf der Innenseite eine harzundurchlässige Schicht auf.

Es ist ferner ein Verfahren bekannt (DE-PS 23 62 784), bei dem der in die zu sanierende Rohrleitung eingebrachte Auskleideschlauch innen eine harzundurchlässige Schicht und außen eine mit Kunstharz getränkte Schicht aufweist. Dieser Auskleideschlauch wird durch Umstülpen in die Rohrleitung eingebracht, wobei die zunächst innen liegende, mit Kunstharz getränkte Schicht nach außen gelangt. Für das Umstülpen des Zweischichtenauskleideschlauches werden bedingt durch die zu verrichtende Walkarbeit im Umstülpbereich relativ große Kräfte benötigt. Durch diese Walkarbeit wird Harz aus der imprägnierten Faserschicht herausgepreßt und zwangsläufig durch Luft ersetzt.

Bei beiden bekannten Verfahren wird ein Auskleideschlauch verwendet, der ausschließlich eine mit härtbarem Kunstharz getränkte Faservliesschicht aufweist, so daß man sich für eine Kunstharzart entscheiden muß. Das bisher bekannte preisgünstige Polyesterharz hat den Nachteil, daß es mit der feuchten Innenseite des zu sanierenden Leitungsrohres keine Klebeverbindung eingeht und während der Aushärtung so stark schrumpft, daß sich zwischen dem zu sanierenden Leitungsrohr und dem Auskleideschlauch ein Ringspalt bildet, der sich dann mit Wasser aus dem Erdreich füllt, das durch Bruchstellen des Altrohres in den Ringraum einfließt und über Hausanschlüsse und Seiteneinläufe in das sanierte Leitungsrohr eindringt. Umgekehrt kann Abwasser über die gleichen Fließwege in das umgebende Erdreich exfiltrieren.

Der Erfindung liegt die Aufgabe zugrunde, ein Verfahren zum Sanieren einer im Erdreich verlegten Rohrleitung der eingangs genannten Art so auszubilden, daß mit einer relativ geringen Menge an gut haftendem, spannungsfrei aushärtendem Kunstharz eine intensive Haftverbindung zwischen dem Auskleideschlauch und der zu sanierenden Rohrleitung erreicht werden kann.

Diese Aufgabe wird durch die im kennzeichnenden Teil des Patentanspruches 1 herausgestellten Verfahrensschritte gelöst.

Da der verwendete Auskleideschlauch aus einer Außenschicht und einer Innenschicht aus jeweils einem Faservlies und aus einer zwischen den genannten Schichten angeordneten, flüssigkeitsundurchlässigen, dünnen Sperrschicht gebildet wird, kann durch die Wahl der Dicke der Außenschicht auch die Menge des an der Innenfläche des Altrohres gut haftenden und spannungsfrei aushärtenden Kunstharzes beeinflußt werden. Ein Kunstharz, der an den Innenflächen der im Erdreich verlegten Altrohre gut haftet und spannungsfrei aushärtet, ist Epoxidharz.

Die aus einem Faservlies bestehende Innenschicht des Auskleideschlauches kann z.B. mit einem Polyesterharz getränkt werden, dem ein chemisches Mittel zugesetzt wird, durch das die Schrumpfung beim Aushärten des Polyesterharzes bis auf 0,3 Prozent oder weniger herabgesetzt wird.

Durch die Verwendung dieser Kunstharzarten wird erreicht, daß der an die Innenwandung der zu sanierenden Rohrleitung angepreßte Auskleideschlauch auch während der Aushärtung der Kunstharze formstabil bleibt und ein Ringspalt zwischen dem Auskleideschlauch und dem Altrohr nicht entstehen kann. Das Kunstharz der Außenschicht geht eine Klebeverbindung mit dem Altrohr ein, so daß das Altrohr und der Auskleideschlauch eine Einheit bilden, deren Statik weitgehend vom Altrohr mitbestimmt wird.

Der beim erfindungsgemäßen Verfahren verwendete Auskleideschlauch kann so behandelt werden wie ein ausschließlich aus Filz gefertigter Schlauch. Die Außen- und die Innenschicht werden vor dem Einziehen des Auskleideschlauches in das zu sanierende Leitungsrohr mit Harz getränkt. Da die zwischen der jeweils aus einem Faservlies bestehenden Außenschicht und der Innenschicht vorgesehene flüssigkeitsundurchlässige, dünne Sperrschicht beim Einziehen des Auskleideschlauches in das zu sanierende Rohr durch die Außenschicht geschützt wird, kann sie extrem dünn ausgebildet werden. Das die Außenschicht bildende Faservlies muß nur so dick sein, daß es eine für die Verbindung mit dem Altrohr notwendige Menge Harz aufnehmen kann.

Zum Anpressen des Auskleideschlauches an die Innenfläche des zu sanierenden Altrohres wird ein Kalibrierschlauch in den Auskleideschlauch durch ein Inversionsrohr gestülpt.

Der Kalibrierschlauch kann innen eine Faservliesschicht und außen eine flüssigkeitsundurchlässige Kunststoffschicht aufweisen, wobei die Dicke der Faservliesschicht geringer ist als die Faservliesschicht des zunächst in die Rohrleitung eingebrachten Auskleideschlauches.

Die Faservliesschicht des Kalibrierschlauches kann aus einem anderen Material als die Faservliesinnenschicht des Auskleideschlauches bestehen. So kann die eine Faservliesschicht aus einem Glasvlies und die andere aus einem Polyestervlies gefertigt werden.

Das Verfahren bietet die Möglichkeit, unterschiedliche Kunstharze für die Tränkung der Faservliesschicht des Kalibrierschlauches und der Faservliesinnenschicht des Auskleideschlauches zu verwenden.

Es ist vorteilhaft, daß das Kunstharz, mit dem die Faservliesschicht des Kalibrierschlauches getränkt wird, eine höhere chemische Beständigkeit aufweist als das zur Tränkung der Faservliesinnenschicht des Auskleideschlauches verwendete Kunstharz.

Weitere Merkmale der Erfindung ergeben sich aus den Unteransprüchen. Ausführungsbeispiele des erfindungsgemäßen Verfahrens sind in den Zeichnungen dargestellt und werden im folgenden beschrieben. Es zeigen:
- Fig. 1: eine zu sanierende unterirdisch verlegte Rohrleitung im Längsschnitt mit einem in zusammengelegtem Zustand eingebrachten Auskleideschlauch,
- Fig. 2: die Rohrleitung nach der Fig. 1 im Längsschnitt mit einem Kalibrierschlauch, der teilweise in den Auskleideschlauch eingestülpt ist,
- Fig. 3: die ausgekleidete Rohrleitung,
- Fig. 4: einen Abschnitt eines ausgekleideten Abwasserkanals mit einem Hauswasseranschluß und einem Schachtanschluß im Schnitt.

Die in den Zeichnungen 1 bis 3 dargestellte, im Erdreich verlegte Rohrleitung 1 bildet einen Abwasserkanal und weist Bruchstellen 2,3,4,5,6 auf. Zur Sanierung dieser Rohrleitung wird die Rohrleitung innen mit einer mehrschichtigen Auskleidung 7 versehen, die in einem Zweistufenverfahren in die Rohrleitung eingebracht wird.

In der ersten Verfahrensstufe wird mittels eines Seils und einer Winde ein mehrschichtiger Auskleideschlauch 8 in zusammengelegtem Zustand durch einen Schacht 9 eingezogen.

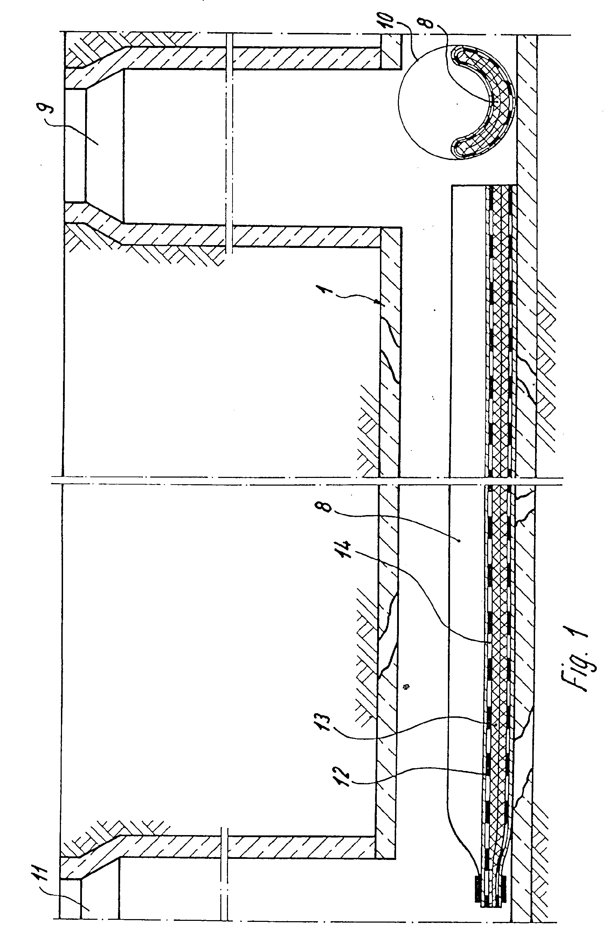

Die Fig. 1 enthält auch die Darstellung des Querschnitts des zusammengelegten Auskleideschlauches 8, aus der sich ergibt, daß der zusammengelegte Auskleideschlauch sich der Innenkontur 10 der Rohrleitung 1 anpaßt und in der Rohrleitung C-förmig ausgebildet ist.

Aus der Fig. 1 ergibt sich ferner, daß sich der Auskleideschlauch 8 über die gesamte Länge der Rohrleitung 1 zwischen zwei Schächten 9 und 11 erstreckt.

Der Auskleideschlauch 8 besteht aus einer Außenschicht 12 und einer Innenschicht 13 aus jeweils einem Faservlies und aus einer zwischen den genannten Schichten angeordneten, flüssigkeitsundurchlässigen, dünnen Sperrschicht 14. Die Sperrschicht kann als aus Kunststoff gefertigte Schlauchfolie ausgebildet sein und beispielsweise aus Polyäthylen, Polypropylen oder aus Polyurethan gefertigt sein und z.B. eine Dicke von 0,5 mm aufweisen. Die Außenschicht 12 kann ca. ein Drittel der Wandstärke des Auskleideschlauches und die Innenschicht 13 etwa zwei Drittel der Wandstärke des Auskleideschlauches aufweisen. Als Faservlies für die Außen- und Innenschicht kann ein Polyestervlies oder ein Glasfaservlies oder eine Kombination aus Polyesterfasern und Glasfasern verwendet werden.

Die Außenschicht 12 wird vor dem Einbringen des Auskleideschlauches in die Rohrleitung teilweise oder vollständig mit einem an den Rohrwerkstoffen gut haftenden und spannungsfrei härtenden Kunstharz getränkt. Die Innenschicht 13 wird vor dem Einziehen des Auskleideschlauches in die zu sanierende Rohrleitung mit dem gleichen oder mit einem anderen Kunstharz imprägniert.

Zum Anpressen des Auskleideschlauches 8 an die Innenfläche 15 des zu sanierenden Leitungsrohres 1 wird ein zweischichtiger Kalibrierschlauch 16 verwendet, der durch ein Inversionsrohr 17 in den Innenraum 18 des Auskleideschlauches 8 eingestülpt wird.

Der Kalibrierschlauch 16 weist innen eine Faservliesschicht 19 und außen eine flüssigkeitsundurchlässige Kunststoffschicht 20 auf. Durch den Umstülpvorgang, der unter der Wirkung eines Druckmediums, z.B. von Wasser, stattfindet, das über eine Leitung 21 in das Inversionsrohr 17 eingeführt wird, wird die zunächst innenliegende Faservliesschicht 19 auf die Innenschicht 13 des Auskleideschlauches 8 gepreßt.

Vor dem Einbringen des Kalibrierschlauches 16 kann die Faservliesschicht 19 mit einem Kunstharz imprägniert werden. Auch wenn die Faservliesschicht des Kalibrierschlauches im wesentlichen die Aufgabe hat, einen Träger für das Harz zu bilden, mit dem der Kalibrierschlauch vor dem Einführen in die Rohrleitung innen beschichtet wird, kann die Faservliesschicht sehr dünn gehalten werden und z.B. eine Dicke von nur einem bis drei Millimetern aufweisen.

Es besteht aber auch die Möglichkeit, auf eine Tränkung der Faservliesschicht des Kalibrierschlauches zu verzichten, zumal beim Einstülpen des Kalibrierschlauches in den Auskleideschlauch die mit Harz getränkte Faservliesinnenschicht 13 des Auskleideschlauches zusammengedrückt wird und Kunstharz in die Faservliesschicht 19 des Auskleideschlauches eindringt und auf diese Weise eine Verbindung zwischen den beiden in der Auskleidung benachbarten Faservliesschichten geschaffen wird.

Es besteht auch die Möglichkeit, die Faservliesinnenschicht 13 des Auskleidungsschlauches mit einem Überschuß an Harz zu versehen, so daß genügend Harz zur Verfügung steht, um in die nicht getränkte Faservliesschicht 19 des Kalibrierschlauches beim Auskleidevorgang einzudringen.

Der Kalibrierschlauch 16 kann auch im Durchmesser kleiner gewählt werden als der Innendurchmesser des Auskleideschlauches, so daß der Kalibrierschlauch während des Einstülpvorganges eine radiale Dehnung erfährt und an den Auskleideschlauch gepreßt wird.

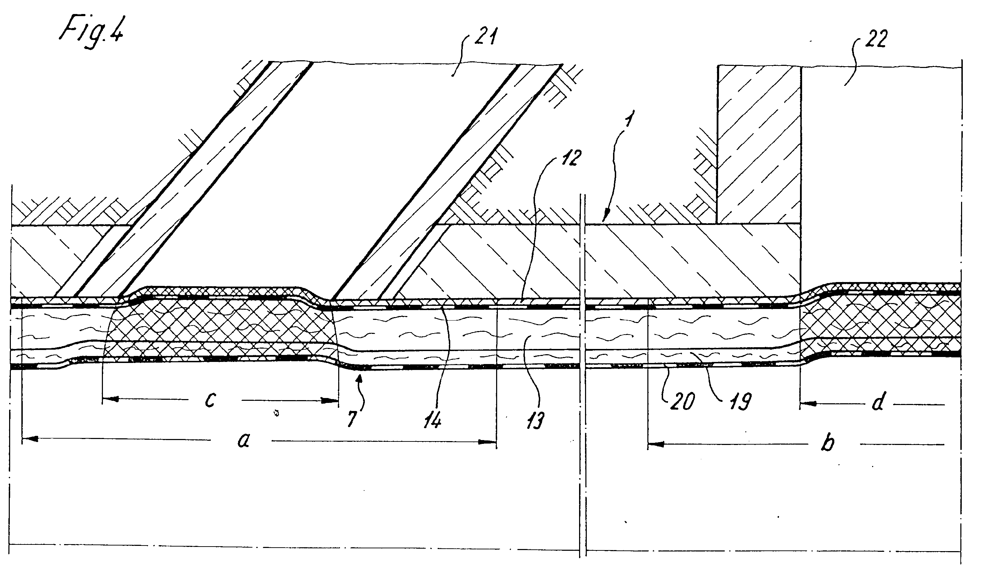

In dem Ausführungsbeispiel nach der Fig. 4 ist die als Abwasserkanal ausgebildete Rohrleitung 1 mit einem Hauswasseranschluß 21 oder mit einem sonstigen Seiteneinlauf und einem Revisionsschacht 22 versehen.

Die schlauchförmige, mehrschichtige Auskleidung 7 der Rohrleitung weist eine Faservliesaußenschicht 12 auf in einer Dicke von ca. einem Millimeter. Diese Faservliesaußenschicht wird in den Bereichen a und b mit einem Coating (Dichtmedium) getränkt, das vor dem Einziehen des Auskleideschlauches in die Rohrleitung von Hand aus aufgetragen wird. Ein solches partielles Präparieren des Auskleideschlauches empfiehlt sich bei hohen Grundwasserständen für den Bereich von Hausanschlüssen, Seiteneinläufen und Inspektionsschächten. Durch dieses Dichtmedium wird eine Hinterläufigkeit der Auskleidung mit infiltrierenden Wassern aus dem Erdreich oder exfiltrierenden Abwässern aus den Seiteneinläufen verhindert.

Nach dem Erstellen der Auskleidung und dem Aushärten des Harzes in den Vliesschichten werden die Bereiche c und d mittels eines Roboters ausgefräst.

Gegenstand der nicht vorveröffentlichten europäischen Patentanmeldung 89111258.3/0 351 570 ist ein Verfahren zum Auskleiden eines im Erdreich verlegten Leitungsrohres unter Verwendung eines wenigstens eine Schicht aus einem Faservlies aufweisenden Auskleideschlauches, dessen Faservliesschicht mit einem aushärtbaren Kunstharz getränkt, der Auskleideschlauch in das Leitungsrohr eingeführt, mit einem Druckmedium an die Innenfläche des zu sanierenden Leitungsrohres angepreßt und das Kunstharz ausgehärtet wird, wobei außerhalb des auszukleidenden Rohres der Auskleideschlauch aus einer Außenschicht und einer Innenschicht aus jeweils einem Faservlies und aus einer zwischen den genannten Schichten angeordneten, flüssigkeitsundurchlässigen, dünnen Sperrschicht gebildet, die Außenschicht mit einem an den Rohrwerkstoffen gut härtenden, spannungsfrei härtenden Kunstharz und die Innenschicht mit dem gleichen oder mit einem anderen beim Härten eine die Haft- oder Klebeverbindung zwischen der Rohrinnenseite und der Außenschicht nicht beeinträchtigende geringe Schrumpfung aufweisenden Kunstharz getränkt und zum Anpressen des Auskleideschlauches an die Innenfläche des zu sanierenden Leitungsrohres ein Kalibrierschlauch verwendet wird, der durch ein Inversionsrohr in den Innenraum des Auskleideschlauches eingestülpt wird.

Der Erfindung liegt die Aufgabe zugrunde, das Verfahren nach der eingangs genannten Art so weiterzuentwickeln, daß der mehrschichtige Aufbau der Auskleidung in zwei Verfahrensstufen unter Erweiterung der Materialwahl der einzelnen Harzträger und der Harzsysteme durchgeführt werden kann.

Diese Aufgabe wird nach der Erfindung dadurch gelöst, daß der Kalibrierschlauch innen eine Faservliesschicht und außen eine flüssigkeitsundurchlässige Kunststoffschicht aufweist und die Dicke der Faservliesschicht geringer ist als die Faservliesinnenschicht des zunächst in die Rohrleitung eingebrachten Auskleideschlauches.

Die Faservliesschicht des Kalibrierschlauches kann aus einem anderen Material als die Faservliesinnenschicht des Auskleideschlauches bestehen. So kann die eine Faservliesschicht aus einem Glasvlies und die andere aus einem Polyestervlies gefertigt werden.

Das erfindungsgemäße Verfahren bietet die Möglichkeit, unterschiedliche Kunstharze für die Tränkung der Faservliesschicht des Kalibrierschlauches und der Faservliesinnenschicht des Auskleideschlauches zu verwenden.

Es ist vorteilhaft, daß das Kunstharz, mit dem die Faservliesschicht des Kalibrierschlauches getränkt wird, eine höhere chemische Beständigkeit aufweist als das zur Tränkung der Faservliesinnenschicht des Auskleideschlauches verwendete Kunstharz.

Weitere Merkmale der Erfindung ergeben sich aus den Unteransprüchen. Ausführungsbeispiele des erfindungsgemäßen Verfahrens sind in den Zeichnungen dargestellt und werden im folgenden beschrieben. Es zeigen:
- Fig. 1: eine zu sanierende unterirdisch verlegte Rohrleitung im Längsschnitt mit einem in zusammengelegtem Zustand eingebrachten Auskleideschlauch,

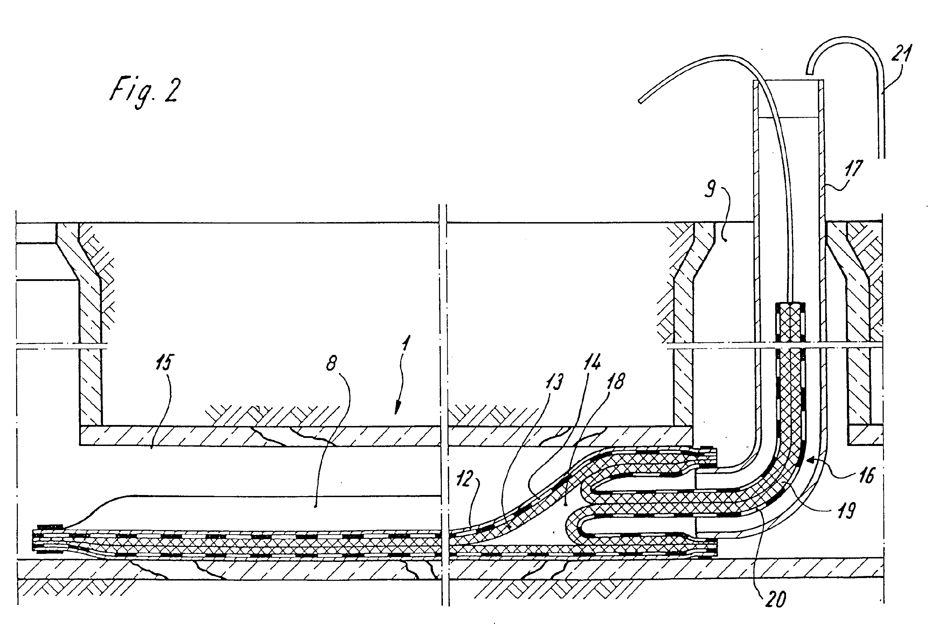

- Fig. 2: die Rohrleitung nach der Fig. 1 im Längsschnitt mit einem Kalibrierschlauch, der teilweise in den Auskleideschlauch eingestülpt ist,

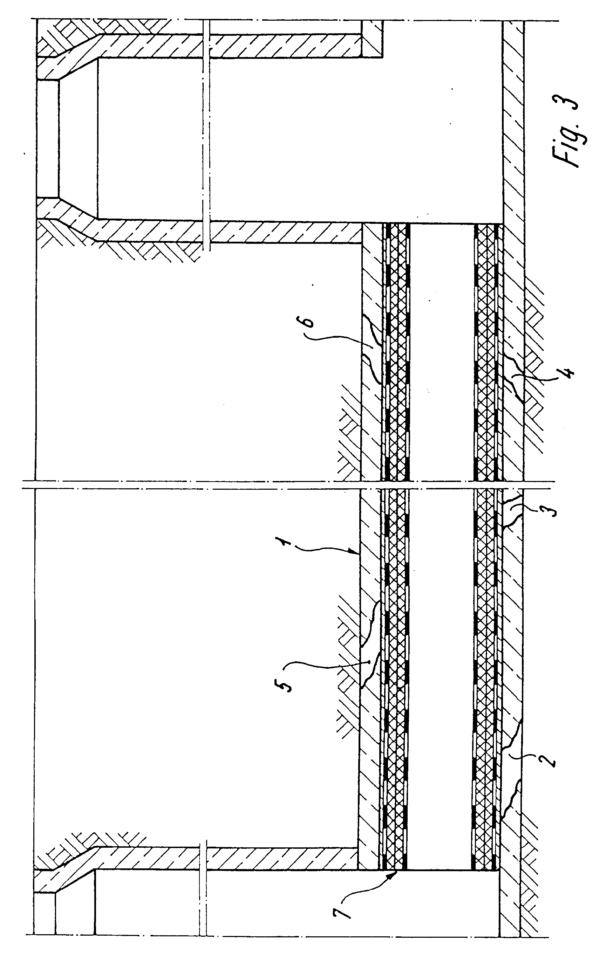

- Fig. 3: die ausgekleidete Rohrleitung,
- Fig. 4: einen Abschnitt eines ausgekleideten Abwasserkanals mit einem Hauswasseranschluß und einem Schachtanschluß im Schnitt.

Die in den Zeichnungen 1 bis 3 dargestellte, im Erdreich verlegte Rohrleitung 1 bildet einen Abwasserkanal und weist Bruchstellen 2,3,4,5,6 auf. Zur Sanierung dieser Rohrleitung wird die Rohrleitung innen mit einer mehrschichtigen Auskleidung 7 versehen, die in einem Zweistufenverfahren in die Rohrleitung eingebracht wird.

In der ersten Verfahrensstufe wird mittels eines Seils und einer Winde ein mehrschichtiger Auskleideschlauch 8 in zusammengelegtem Zustand durch einen Schacht 9 eingezogen.

Die Fig. 1 enthält auch die Darstellung des Querschnitts des zusammengelegten Auskleideschlauches 8, aus der sich ergibt, daß der zusammengelegte Auskleideschlauch sich der Innenkontur 10 der Rohrleitung 1 anpaßt und in der Rohrleitung C-förmig ausgebildet ist.

Aus der Fig. 1 ergibt sich ferner, daß sich der Auskleideschlauch 8 über die gesamte Länge der Rohrleitung 1 zwischen zwei Schächten 9 und 11 erstreckt.

Der Auskleideschlauch 8 besteht aus einer Außenschicht 12 und einer Innenschicht 13 aus jeweils einem Faservlies und aus einer zwischen den genannten Schichten angeordneten, flüssigkeitsundurchlässigen, dünnen Sperrschicht 14. Die Sperrschicht kann als aus Kunststoff gefertigte Schlauchfolie ausgebildet sein und beispielsweise aus Polyäthylen, Polypropylen oder aus Polyurethan gefertigt sein und z.B. eine Dicke von 0,5 mm aufweisen. Die Außenschicht 12 kann ca. ein Drittel der Wandstärke des Auskleideschlauches und die Innenschicht 13 etwa zwei Drittel der Wandstärke des Auskleideschlauches aufweisen. Als Faservlies für die Außen- und Innenschicht kann ein Polyestervlies oder ein Glasfaservlies oder eine Kombination aus Polyesterfasern und Glasfasern verwendet werden.

Die Außenschicht 12 wird vor dem Einbringen des Auskleideschlauches in die Rohrleitung teilweise oder vollständig mit einem an den Rohrwerkstoffen gut haftenden und spannungsfrei härtenden Kunstharz getränkt. Die Innenschicht 13 wird vor dem Einziehen des Auskleideschlauches in die zu sanierende Rohrleitung mit dem gleichen oder mit einem anderen Kunstharz imprägniert.

Zum Anpressen des Auskleideschlauches 8 an die Innenfläche 15 des zu sanierenden Leitungsrohres 1 wird ein zweischichtiger Kalibrierschlauch 16 verwendet, der durch ein Inversionsrohr 17 in den Innenraum 18 des Auskleideschlauches 8 eingestülpt wird.

Der Kalibrierschlauch 16 weist innen eine Faservliesschicht 19 und außen eine flüssigkeitsundurchlässige Kunststoffschicht 20 auf. Durch den Umstülpvorgang, der unter der Wirkung eines Druckmediums, z.B. von Wasser, stattfindet, das über eine Leitung 21 in das Inversionsrohr 17 eingeführt wird, wird die zunächst innenliegende Faservliesschicht 19 auf die Innenschicht 13 des Auskleideschlauches 8 gepreßt.

Vor dem Einbringen des Kalibrierschlauches 16 kann die Faservliesschicht 19 mit einem Kunstharz imprägniert werden. Auch wenn die Faservliesschicht des Kalibrierschlauches im wesentlichen die Aufgabe hat, einen Träger für das Harz zu bilden, mit dem der Kalibrierschlauch vor dem Einführen in die Rohrleitung innen beschichtet wird, kann die Faservliesschicht sehr dünn gehalten werden und z.B. eine Dicke von nur einem bis drei Millimetern aufweisen.

Es besteht aber auch die Möglichkeit, auf eine Tränkung der Faservliesschicht des Kalibrierschlauches zu verzichten, zumal beim Einstülpen des Kalibrierschlauches in den Auskleideschlauch die mit Harz getränkte Faservliesinnenschicht 13 des Auskleideschlauches zusammengedrückt wird und Kunstharz in die Faservliesschicht 19 des Auskleideschlauches eindringt und auf diese Weise eine Verbindung zwischen den beiden in der Auskleidung benachbarten Faservliesschichten geschaffen wird.

Es besteht auch die Möglichkeit, die Faservliesinnenschicht 13 des Auskleidungsschlauches mit einem Überschuß an Harz zu versehen, so daß genügend Harz zur Verfügung steht, um in die nicht getränkte Faservliesschicht 19 des Kalibrierschlauches beim Auskleidevorgang einzudringen.

Der Kalibrierschlauch 16 kann auch im Durchmesser kleiner gewählt werden als der Innendurchmesser des Auskleideschlauches, so daß der Kalibrierschlauch während des Einstülpvorganges eine radiale Dehnung erfährt und an den Auskleideschlauch gepreßt wird.

In dem Ausführungsbeispiel nach der Fig. 4 ist die als Abwasserkanal ausgebildete Rohrleitung 1 mit einem Hauswasseranschluß 21 oder mit einem sonstigen Seiteneinlauf und einem Revisionsschacht 22 versehen.

Die schlauchförmige, mehrschichtige Auskleidung 7 der Rohrleitung weist eine Faservliesaußenschicht 12 auf in einer Dicke von ca. einem Millimeter. Diese Faservliesaußenschicht wird in den Bereichen a und b mit einem Coating (Dichtmedium) getränkt, das vor dem Einziehen des Auskleideschlauches in die Rohrleitung von Hand aus aufgetragen wird. Ein solches partielles Präparieren des Auskleideschlauches empfiehlt sich bei hohen Grundwasserständen für den Bereich von Hausanschlüssen, Seiteneinläufen und Inspektionsschächten. Durch dieses Dichtmedium wird eine Hinterläufigkeit der Auskleidung mit infiltrierenden Wassern aus dem Erdreich oder exfiltrierenden Abwässern aus den Seiteneinläufen verhindert.

Nach dem Erstellen der Auskleidung und dem Aushärten des Harzes in den Vliesschichten werden die Bereiche c und d mittels eines Roboters ausgefräst.

## Patentansprüche (Patentansprüche für folgende(n) Vertragsstaat(en): DK, FR)

1. Verfahren zum Auskleiden eines im Erdreich verlegten Leitungsrohres, vorzugsweise eines aus Beton, Asbestzement oder Steinzeug gefertigten Abwasserkanals, unter Verwendung eines wenigstens eine Schicht aus einem Faservlies aufweisenden Auskleideschlauches, dessen Faservliesschicht mit einem aushärtbaren Kunstharz getränkt, der Auskleideschlauch in das Leitungsrohr eingeführt, mit einem Druckmedium an die Innenfläche des zu sanierenden Leitungsrohres angepreßt und das Kunstharz ausgehärtet wird, **dadurch gekennzeichnet,** daß außerhalb des auszukleidenden Rohres oder Kanals der Auskleideschlauch (8) aus einer Außenschicht (12) und einer Innenschicht (13) aus jeweils einem Faservlies und aus einer zwischen den genannten Schichten angeordneten, flüssigkeitsundurchlässigen, dünnen Sperrschicht(14) gebildet, die Außenschicht (12) mit einem an den Rohr- und Kanalwerkstoffen gut haftenden, spannungsfrei härtenden Kunstharz und die Innenschicht (13) mit dem gleichen oder einem anderen beim Härten eine die Haft- oder Klebeverbindung zwischen der Rohr- oder Kanalinnenseite und der Außenschicht nicht beeinträchtigende geringe Schrumpfung aufweisenden Kunstharz getränkt wird.

2. Verfahren nach Anspruch 1, dadurch gekennzeichnet, daß zum Tränken der Vliesaußenschicht (12) ein Epoxidharz und zum Tränken der Vliesinnenschicht (13) ein Polyesterharz verwendet wird und dem Polyesterharz ein die Schrumpfung bis auf 0,3 Prozent oder weniger herabsetzendes chemisches Mittel zugesetzt wird.

3. Verfahren nach Anspruch 1 oder 2, dadurch gekennzeichnet, daß als Sperrschicht (14) eine Schlauchfolie aus einem Kunststoff, beispielsweise aus Polyäthylen, Polypropylen oder Polyurethan verwendet wird.

4. Verfahren nach einem der vorhergehenden Ansprüche, dadurch gekennzeichnet, daß ein Auskleideschlauch mit einer Außenschicht (12) die ca. ein Drittel der Wandstärke des Auskleideschlauches (8) und mit einer Innenschicht (13) die ca. zwei Drittel der Wandstärke des Auskleideschlauches (8) aufweist, verwendet wird.

5. Verfahren nach einem der Ansprüche 1 bis 4, dadurch gekennzeichnet, daß als Faservlies ein Polyestervlies oder ein Glasfaservlies oder eine Kombination aus Polyesterfasern oder Glasfasern verwendet wird.

6. Verfahren nach Anspruch 1, dadurch gekennzeichnet, daß zum Anpressen des Auskleideschlauches (8) an die Innenfläche der zu sanierenden Rohrleitung (1) ein Kalibrierschlauch (16) verwendet wird, der durch ein Inversionsrohr (17) in den Innenraum des Auskleideschlauches (8) eingestülpt wird, der Kalibrierschlauch (16) innen eine Faservliesschicht (19) und außen eine flüssigkeitsundurchlässige Kunststoffschicht (20) aufweist und die Dicke der Faservliesschicht geringer ist als die Faservliesinnenschicht des zunächst in die Rohrleitung (11) eingebrachten Auskleideschlauches (8).

7. Verfahren nach Anspruch 6, dadurch gekennzeichnet, daß die Faservliesschicht (19) des Kalibrierschlauches (16) vor dem Einstülpen des Kalibrierschlauches mit Kunstharz getränkt wird.

8. Verfahren nach Anspruch 6 und 7, dadurch gekennzeichnet, daß die Faservliesschicht (19) des Kalibrierschlauches eine Dicke von einem bis drei Millimetern aufweist.

9. Verfahren nach Anspruch 6, dadurch gekennzeichnet, daß die Faservliesschicht des Kalibrierschlauches (16) aus einem anderen Material als die Faservliesinnenschicht des Auskleideschlauches besteht.

10. Verfahren nach Anspruch 9, dadurch gekennzeichnet, daß die eine Faservliesschicht aus einem Glasvlies und die andere aus einem Polyestervlies besteht.

11. Verfahren nach einem der Ansprüche 7 bis 10, dadurch gekennzeichnet, daß die Kunstharze, mit denen die Faservliesschicht des Kalibrierschlauches und die Faservliesinnenschicht des Auskleideschlauches getränkt werden, unterschiedlich sind.

12. Verfahren nach Anspruch 9, dadurch gekennzeichnet, daß das Kunstharz, mit dem die Faservliesschicht des Kalibrierschlauches getränkt wird, eine höhere chemische Beständigkeit aufweist als das zur Tränkung der Faservliesinnenschicht des Auskleideschlauches verwendete Kunstharz.

13. Verfahren nach Anspruch 6, dadurch gekennzeichnet, daß die Faservliesinnenschicht des Auskleideschlauches mit einem Überschuß an Harz und der Kalibrierschlauch nicht mit Harz imprägniert wird.

14. Verfahren nach Anspruch 6, dadurch gekennzeichnet, daß der Auskleideschlauch eine Faservliesaußenschicht mit einer Dicke von ca. einem Millimeter zur örtlich begrenzten Aufnahme eines Coatings (Dichtmedium) aufweist, das von Hand vor Einziehen des Auskleideschlauches in ein zu sanierendes Rohr aufgetragen wird.

15. Verfahren nach einem der vorhergehenden Ansprüche, dadurch gekennzeichnet, daß der Kalibrierschlauch im Durchmesser kleiner gewählt wird als der Innendurchmesser des Auskleideschlauches und der Kalibrierschlauch während des Einstülpvorganges eine radiale Dehnung erfährt und an den Auskleideschlauch gepreßt wird.

## Patentansprüche (Patentansprüche für folgende(n) Vertragsstaat(en): DE, GB, NL)

1. Verfahren zum Auskleiden eines im Erdreich verlegten Leitungsrohres, vorzugsweise eines aus Beton, Asbestzement oder Steinzeug gefertigten Abwasserkanals, unter Verwendung eines wenigstens eine Schicht aus einem Faservlies aufweisenden Auskleideschlauches, dessen Faservliesschicht mit einem aushärtbaren Kunstharz getränkt, der Auskleideschlauch in das Leitungsrohr eingeführt, mit einem Druckmedium an die Innenfläche des zu sanierenden Leitungsrohres angepreßt und das Kunstharz ausgehärtet wird, wobei außerhalb des auszukleidenden Rohres oder Kanals der Auskleideschlauch (8) aus einer Außenschicht (12) und einer Innenschicht (13) aus jeweils einem Faservlies und aus einer zwischen den genannten Schichten angeordneten, flüssigkeitsundurchlässigen, dünnen Sperrschicht (14) gebildet, die Außenschicht (12) mit einem an den Rohr- und Kanalwerkstoffen gut haftenden, spannungsfrei härtenden Kunstharz und die Innenschicht (13) mit dem gleichen oder einem anderen beim Härten eine die Haft- oder Klebeverbindung zwischen der Rohr- oder Kanalinnenseite und der Außenschicht nicht beeinträchtigende geringe Schrumpfung aufweisenden Kunstharz getränkt wird und zum Anpressen des Auskleideschlauches (8) an die Innenfläche der zu sanierenden Rohrleitung (1) ein Kalibrierschlauch (16) verwendet wird, der durch ein Inversionsrohr (17) in den Innenraum des Auskleideschlauches (8) eingestülpt wir, **dadurch gekennzeichnet,** daß der Kalibrierschlauch (16) innen eine Faservliesschicht (19) und außen eine flüssigkeitsundurchlässige Kunststoffschicht (20) aufweist und die Dicke der Faservliesschicht geringer ist als die Faservliesinnenschicht des zunächst in die Rohrleitung (11) eingebrachten Auskleideschlauches (8).

2. Verfahren nach Anspruch 1, dadurch gekennzeichnet, daß die Faservliesschicht (19) des Kalibrierschlauches (16) vor dem Einstülpen des Kalibrierschlauches mit Kunstharz getränkt wird.

3. Verfahren nach Anspruch 1, dadurch gekennzeichnet, daß die Faservliesschicht (19) des Kalibrierschlauches eine Dicke von einem bis frei Millimetern aufweist.

4. Verfahren nach Anspruch 1, dadurch gekennzeichnet, daß die Faservliesschicht des Kalibrierschlauches (16) aus einem anderen Material als die Faservliesinnenschicht des Auskleideschlauches besteht.

5. Verfahren nach Anspruch 4, dadurch gekennzeichnet, daß die eine Faservliesschicht aus einem Glasvlies und die andere aus einem Polyestervlies besteht.

6. Verfahren nach einem der Ansprüche 2 bis 5, dadurch gekennzeichnet, daß die Kunstharze, mit denen die Faservliesschicht des Kalibrierschlauches und die Faservliesinnenschicht des Auskleideschlauches getränkt werden, unterschiedlich sind.

7. Verfahren nach Anspruch, dadurch gekennzeichnet, daß das Kunstharz, mit dem die Faservliesschicht des Kalibrierschlauches getränkt wird, eine höhere chemische Beständigkeit aufweist als das zur Tränkung der Faservliesinnenschicht des Auskleideschlauches verwendete Kunstharz.

8. Verfahren nach Anspruch 1, dadurch gekennzeichnet, daß die Faservliesinnenschicht des Auskleideschlauches mit einem Überschuß an Harz und der Kalibrierschlauch nicht mit Harz imprägniert wird.

9. Verfahren nach Anspruch 1, dadurch gekennzeichnet, daß der Auskleideschlauch eine Faservliesaußenschicht mit einer Dicke von ca. einem Millimeter zur örtlich begrenzten Aufnahme eines Coatings (Dichtmedium) aufweist, das von Hand vor Einziehen des Auskleideschlauches in ein zu sanierendes Rohr aufgetragen wird.

10. Verfahren nach einem der vorhergehenden Ansprüche, dadurch gekennzeichnet, daß der Kalibrierschlauch im Durchmesser kleiner gewählt wird als der Innendurchmesser des Auskleideschlauches und der Kalibrierschlauch während des Einstülpvorganges eine radiale Dehnung erfährt und an den Auskleideschlauch gepreßt wird.

## Claims (Claims for the following Contracting State(s): DK, FR)

1. A method of lining a conduit which is laid in the ground, pereferably a sewer made from concrete, asbestos cement or blocks, using a lining tube which has at least one layer of a fibre fleece and the fibre fleece layer of which is impregnated with a hardenable synthetic resin, the lining tube is introduced into the conduit, pressed by a pressure medium against the inside surface of the conduit to be renovated, and the synthetic resin is hardened, characterised in that outside the pipe or sewer to be lined the lining tube (8) is formed from an outside layer (12) and an inside layer (13) each comprising a fibre fleece and a fluid-impervious thin barrier layer (14) which is disposed between said layers, the outside layer (12) is impregnated with a synthetic resin which has good adhesion to the materials of the pipe and sewer and which hardens in a stress-free condition and the inside layer (13) is impregnated with the same or another synthetic resin which upon hardening exhibits a low degree of shrinkage which does not adversely affect the adhesive or bonding join between the inside of the pipe or sewer and the outside layer.

2. A method according to claim 1 characterised in that an epoxy resin in used for impregnating the fleece outside layer (12) and a polyester resin is used for impregnating the fleece inside layer (13) and a chemical agent which reduces the shrinkage to 0.3% or less added to the polyester resin.

3. A method according to claim 1 or claim 2 characterised in that a tubular foil of a plastics material,for example polyethylene, polypropylene or polyurethane is used as the barrier layer (14).

4. A method according to any one of the preceding claims characterised in that a lining tube with an outside layer (12) which is of approximately one third of the wall thickness of the lining tube (8) and an inside layer (13) which is of approximately two thirds of the wall thickness of the lining tube (8) is used.

5. A method according to any one of claims 1 to 4 characterised in that the fibre fleece used is a polyester fleece or a glass fibre fleece or a combination of polyester fibres or glass fibres.

6. A method according to claim 1 characterised in that for pressing the lining tube (8) against the inside surface of the conduit (1) to be renovated use is made of a calibration tube (16) which is introduced by being turned inside out into the interior of the lining tube (8) by means of an inversion tube (17), the calibration tube (16) has a fibre fleece layer (19) on its inside and a fluid-impervious plastics layer (20) on its outside and the thickness of the fibre fleece layer is smaller than the fibre fleece inside layer of the lining tube (8) which is first introduced into the conduit (11).

7. A method according to claim 6 characterised in that the fibre fleece layer (19) of the calibration tube (16) is impregnated with synthetic resion prior to the operation of turning the calibration tube inside out.

8. A method according to claim 6 or claim 7 characterised in that the fibre fleece layer (19) of the calibration tube is of a thickness of from one to three millimetres.

9. A method according to claim 6 characterised in that the fibre fleece layer of the calibration tube (16) comprises a different material from the fibre fleece inside layer of the lining tube.

10. A method according to claim 9 characterised in that the one fibre fleece layer comprises a glass fleece and the other comprises a polyester fleece.

11. A method according to one of claims 7 to 10 characterised in that the synthetic resins with which the fibre fleece layer of the calibration tube and the fibre fleece inside layer of the lining tube are impregnated are different.

12. A method according to claim 9 characterised in that the synthetic resin with which the fibre fleece layer of the calibration tube is impregnated has a higher level of chemical resistance than the synthetic resin used for impregnation of the fibre fleece inside layer of the lining tube.

13. A method according to claim 6 characterised in that the fibre fleece inside layer of the lining tube is impregnated with an excess of resin and the calibration tube is not impregnated with resin.

14. A method according to claim 6 characterised in that the lining tube has a fibre fleece outside layer of a thickness of about one millimetre for locally limitedly receiving a coating (sealing medium) which is applied by hand prior to the lining tube being pulled into a pipe to be renovated.

15. A method according to one of the preceding claims characterised in that the calibration tube is of smaller diameter than the inside diameter of the lining tube and the calibration tube undergoes radial expansion and is pressed against the lining tube during the operation of introducing the calibration tube.

## Claims (Claims for the following Contracting State(s): BR, GB, NL)

1. A method of lining a conduit rich is laid in the ground, preferably a sewer made from concrete, asbestos cement or blocks, using a lining tube rich has at least one layer of a fibre fleece and the fibre fleece layer of which is impregnated with a hardenable synthetic resin, the lining tube is introduced into the conduit, pressed by a pressure medium against the inside surface of the conduit to be renovated, and the synthetic resin is hardened, wherein outside the pipe or sewer to be lined the lining tube (8) is formed from an outside layer (12) and an inside layer (13) each comprising a fibre fleece and a fluid-impervious thin barrier layer (14) which is disposed between said layers, the outside layer (12) is impregnated with a synthetic resin which has good adhesion to the materials of the pipe and sewer and which hardens in a stress-free condition and the inside layer (13) is impregnated with the same or another synthetic resin rich upon hardening exhibits a low degree of shrinkage rich does not adversely affect the adhesive or bonding join between the inside of the pipe or sewer and the outside layer and for pressing the lining tube (8) against the inside surface of the conduit (1) to be renovated use is made of a calibration tube (16) rich is introduced by being turned inside out into the interior of the lining tube (8) by means of an inversion tube (17), characterised in that the calibration tube (16) has a fibre fleece layer (19) on its inside and a fluid-impervious plastics layer (20) on its outside and the thickness of the fibre fleece layer is smaller than the fibre fleece inside layer of the lining tube (8) rich is first introduced into the conduit (11).

2. A method according to claim 1 characterised in that the fibre fleece layer (19) of the calibration tube (16) is impregnated with synthetic resin prior to the operation of turning the calibration tube inside out.

3. A method according to claim 1 characterised in that the fibre fleece layer ( 19 ) of the calibration tube is of a thickness of from one to three millimetres.

4. A method according to claim 1 characterised in that the fibre fleece layer of the calibration tube (16) comprises a different arterial from the fibre fleece inside layer of the lining tube.

5. A method according to claim 4 characterised in that the one fibre fleece layer comprises a glass fleece and the other comprises a polyester fleece.

6. A method according to one of claims 2 to 5 characterised in that the synthetic resins with which the fibre fleece layer of the calibration tube and the fibre fleece inside layer of the lining tube are impregnated are different.

7. A method according to claim characterised in that the synthetic resin with which the fibre fleece layer of the calibration tube is impregnated has a higher level of chemical resistance than the synthetic resin used for impregnation of the fibre fleece inside layer of the lining tube.

8. A method according to claim 1 characterised in that the fibre fleece inside layer of the lining tube is impregnated with an excess of resin and the calibration tube is not impregnated with resin.

9. A method according to claim 1 characterised in that the lining tube has a fibre fleece outside layer of a thickness of abut one millimetre for locally limitedly receiving a coating (sealing medium) which is applied by hand prior to the lining tube being pulled into a pipe to be renovated.

10. A method according to one of the preceding claims characterised in that the calibration tube is of smaller diameter than the inside diameter of the lining tube and the calibration tube undergoes radial expansion and is pressed against the lining tube during the operation of introducing the calibration tube.

## Revendications (Revendications pour l'(les) Etat(s) contractant(s) suivant(s): DK, FR)

1. Procédé de revêtement d'une conduite enterrée dans le sol, de préférence une conduite d'eaux usées réalisée en béton, ciment-amiante en grès en utilisant au moins un tube de revêtement constitué d'une couche en forme de nappe de fibres, dont la nappe de fibres est imprégnée de résine synthétique durcissable, en introduisant le tube de revêtement dans la conduite, en appliquant avec un moyen de pression le tube sur la surface interne de la conduite à rénover et en faisant durcir la résine de synthèse, procédé caractérisé en ce qu'en dehors de la conduite à revêtir, ou de l'égout, on constitue le tube de revêtement (8) d'une couche externe (12) et d'une couche interne (13), toutes deux en nappe de fibres et d'une couche mince (14) de barrage, imperméable aux liquides, disposée entre les couches citées, la couche externe (12) étant constituée de résine synthétique durcissant sans contrainte et adhérant bien sur les matériaux de conduite et d'égout, et la couche interne (13) étant imprégnée d'une résine synthétique identique ou différente, présentant au durcissement un retrait réduit qui ne diminue pas la liaison d'adhérence ou de collage entre la face interne de la conduite ou de l'égout et la couche externe.

2. Procédé selon la revendication 1, caractérisé en ce que pour imprégner la couche externe de nappe (12) on utilise une résine époxyde et pour imprégner la couche interne de nappe (13) on utilise une résine polyester et on ajoute à la résine polyester un agent chimique diminuant le retrait à 0,3 pour cent ou moins.

3. Procédé selon la revendication 1, caractérisé en ce que comme couche de barrage (14) on utilise un film tubulaire en matière plastique, par exemple en polyéthylène, polypropylène ou polyuréthane.

4. Procédé selon l'une des revendications précédentes, caractérisé en ce qu'on utilise un tube de revêtement avec une couche externe (12) qui représente environ un tiers de l'épaisseur de paroi du tube de revêtement (8) et avec une couche interne (13) qui représente environ deux tiers de l'épaisseur de paroi du tube de revêtement (8).

5. Procédé selon l'une des revendications 1 à 4, caractérisé en ce qu'on utilise comme nappe de fibres une nappe de polyester, ou une nappe de fibres de verre, ou une combinaison de fibres de verre et de fibres de polyester.

6. Procédé selon la revendication 1, caractérisé en ce que pour comprimer le tube de revêtement (8) sur la surface interne de la conduite à rénover (1), on utilise un tube de calibrage (16), qui est retourné par un tube d'inversion (17) dans l'espace interne du tube de revêtement (8), le tube de calibrage (16) présentant à l'intérieur une couche de nappe de fibres (19) et à l'extérieur une couche de matière plastique (20) imperméable aux liquides et l'épaisseur de la couche de nappe de fibres étant plus faible que l'épaisseur de la couche interne de nappe de fibres du premier tube de revêtement (8) déposé dans la conduite (11).

7. Procédé selon la revendication 6, caractérisé en ce que la couche (19) de nappe de fibres du tube de calibrage (16) est imprégnée de résine synthétique avant le retournement du tube de calibrage.

8. Procédé selon la revendication 6 et 7, caractérisé en ce que la couche (29) de nappe de fibres du tube de calibrage présente une épaisseur comprise entre un et trois millimètres.

9. Procédé selon la revendication 6, caractérisé en ce que la couche de nappe de fibres du tube de calibrage (16) est constituée d'un autre matériau que celui de la couche interne de nappe de fibres du tube de revêtement.

10. Procédé selon la revendication 9, caractérisé en ce qu'une couche de nappe de fibres est en nappe de verre et l'autre est en nappe de polyester.

11. Procédé selon l'une des revendications 7 à 10, caractérisé en ce que les résines synthétiques avec lesquelles on imprègne la couche de nappe de fibres du tube de calibrage et la couche interne de nappe de fibres du tube de revêtement, sont différentes.

12. Procédé selon la revendication 9, caractérisé en ce que la résine synthétique, avec laquelle la couche de nappe de fibres est imprégnée, présente une résistance chimique supérieure à celle de la résine synthétique utilisée pour imprégner la couche interne de nappe de fibres du tube de revêtement.

13. Procédé selon la revendication 6, caractérisé en ce que la couche interne de nappe de fibres du tube de revêtement est imprégnée d'un excès de résine et que le tube de calibrage n'est pas imprégné de résine.

14. Procédé selon la revendication 6, caractérisé en ce que le tube de revêtement présente une couche externe de nappe de fibres d'une épaisseur d'environ un millimètre pour recevoir localement de manière limitée un revêtement (agent d'étanchéité), qu'on dépose à la main avant l'insertion du tube de revêtement dans une conduite à rénover.

15. Procédé selon l'une des revendications précédentes, caractérisé en ce que le tube de calibrage est choisi de diamètre plus petit que le diamètre intérieur du tube de revêtement et le tube de calibrage pendant le processus de retournement subit une dilatation radiale et est comprimé sur le tube de revêtement.

## Revendications (Revendications pour l'(les) Etat(s) contractant(s) suivant(s): BR, GB, NL)

1. Procédé de revêtement d'une conduite enterrée dans le sol, de préférence une conduite d'eaux usées réalisée en béton, ciment-amiante ou grès, en utilisant au moins un tube de revêtement constitué d'une couche en forme de nappe de fibres, dont la nappe de fibres est imprégnée de résine synthétique durcissable, en introduisant le tube de revêtement dans la conduite, en appliquant avec un moyen de pression sur la surface interne de la conduite à rénover et en faisant durcir la résine de synthèse, procédé selon lequel en dehors de la conduite à revêtir, ou de l'égout, on constitue le tube de revêtement (8) d'une couche externe (12) et d'une couche interne (13), toutes deux en nappe de fibres et d'une couche mince (14) de barrage, imperméable aux liquides, disposée entre les couches précitées, la couche externe (12) étant constituée de résine synthétique durcissant sans contrainte et adhérant bien sur les matériaux de conduite et d'égout, et la couche interne (13) étant imprégnée d'une résine synthétique identique ou différente, présentant au durcissement un retrait réduit qui ne diminue pas la liaison d'adhérence ou de collage entre la face interne de !a conduite ou de l'égout et la couche externe et, pour comprimer le tube de revêtement (8) sur la surface interne de la conduite à rénover (1), on utilise un tube de calibrage (16), qui est retourné par un tube d'inversion (17) dans l'espace interne du tube de revêtement (8), caractérisé en ce que le tube de calibrage (16) présente à l'intérieur une couche de nappe de fibres (19) et à l'extérieur une couche de matière plastique (20) imperméable aux liquides et l'épaisseur de la couche de nappes de fibres étant plus faible que l'épaisseur de la couche interne de nappe de fibres du premier tube de revêtement (8) déposé dans la conduite (11).

2. Procédé selon la revendication 1, caractérisé en ce que la couche (19) de nappe de fibres du tube de calibrage (16) est imprégné de résine synthétique avant le retournement du tube de calibrage.

3. Procédé selon la revendication 1, caractérisé en ce que la couche (19) de nappe de fibres du tube de calibrage présente une épaisseur comprise entre un et trois millimètres.

4. Procédé selon la revendication 1, caractérisé en ce que la couche de nappe de fibres du tube de calibrage (16) est constituée par un autre matériau que celui de la couche interne de nappe de fibres du tube de revêtement.

5. Procédé selon la revendication 4, caractérisé en ce qu'une couche de nappe de fibres est en nappe de verre et l'autre est en nappe de polyester.

6. Procédé selon l'une des revendications 2 à 5, caractérisé en ce que les résines synthétiques avec lesquelles on imprègne la couche de nappe de fibres du tube de calibrage et la couche interne de nappe de fibres du tube de revêtement sont différentes.

7. Procédé selon la revendication 1, caractérisé en ce que la résine synthétique avec laquelle la couche de nappe de fibres du tube de calibrage est imprégnée présente une résistance chimique supérieure à celle de la résine synthétique utilisée pour imprégner la couche interne de nappe de fibres du tube de revêtement.

8. Procédé selon la revendication 1, caractérisé en ce que la couche interne de nappe de fibres du tube de revêtement est imprégnée d'un excès de résine et que le tube de calibrage n'est pas imprégné de résine.

9. Procédé selon la revendication 1, caractérisé en ce que le tube de revêtement présente une couche externe de nappe de fibres d'une épaisseur d'environ un millimètre pour recevoir localement, de manière limitée, un revêtement (agent d'étanchéité) qu'on dépose à la main avant l'insertion du tube de revêtement dans une conduite à rénover.

10. Procédé selon l'une des revendications précédentes, caractérisé en ce que le tube de calibrage est choisi de diamètre plus petit que le diamètre intérieur du tube de revêtement, et le tube de calibrage, pendant le processus de retournement, subit une dilatation radiale et est comprimé sur le tube de revêtement.
